# EUROPEAN PATENT APPLICATION

(11) **EP 2 111 815 A1**
(43) Date of publication of application: **28.10.2009**
(21) Application number: 08007750.6
(22) Date of filing: 22.04.2008
(51) Int. Cl.: A61C 8/00

(54) **Dental device and method**

(71) Applicant: Nobel Biocare Services AG, 8058 Zürich-Flughafen (CH)
(72) Inventor: Jörneus, Lars, 430 30 Frillesäs (SE); Björn, Göran, 439 34 Onsala (SE)
(74) Representative: Byström, Kurt Linus

(57) **Abstract**

A device (1) for enabling adjustment of a dental restoration (2) relative at least one dental fixture (3) is disclosed. The device (2) comprises a dental restoration (2) comprising at least one recess (4) having a recess wall portion (5). An attachment portion (10) has an attachment wall portion (11) devised for arrangement at least partly within the recess wall portion. An attachment element (12) is devised for arrangement relative a dental fixture (3). The wall portions are tiltable when arranged in relation to one another. A bridging element (13) is arranged between the wall portions for mechanically connecting said wall portions. A method for adjusting a dental restoration relative at least one dental fixture is also disclosed.

## Description

### Field of the Invention

This invention pertains in general to the field of dental restorations. More particularly the invention relates to a device for enabling attachment of a dental restoration relative at least one dental fixture, and a method for adjusting a dental restoration relative at least one dental fixture.

### Background of the Invention

A dental restoration can be provided to restore one or several missing teeth. The dental restoration may e.g. be attached to a dental fixture, such as a dental implant. The dental restoration may e.g. comprise a crown or a bridge. A crown may be supported by a single fixture, whereas a bridge may be supported by a plurality of fixtures. A screw retained bridge may be configured to receive a screw for attachment to the fixture. A connection surface of the dental restoration may be configured to be aligned with a connection surface of the fixture or a spacer, such as an abutment, attached thereto.

The dental restoration may be pre-planned using a dental model mimicking a situation in the oral cavity of a patient. A position of the connection surface of the dental restoration may be planned on the model. The planning may e.g. be carried out before surgery, i.e. before the fixture is actually installed in the patient. This concept is for example available by the NobelGuide^{®} planning and treatment concept available via the applicant of the present invention. Alternatively, an impression of the situation in the oral cavity of the patient is obtained after installation of the fixtures to obtain the positions of the fixtures. Then, the dental restoration is made based on the impression.

Irrespectively whether the dental restoration is pre-planned before surgery or based on an impression, a misalignment in the vertical as well as the lateral direction may exist in the interface between the connection surfaces of the dental restoration and a fixture installed in the patient, which can make it cumbersome to fixedly secure the dental restoration to the fixture. When the dental restoration is permanently attached, the components are rigidly fixed to each other. If the components are misaligned, stress between the components can occur increasing the risk that the dental restoration breaks, bone resorption around the fixture is caused, any screw in the assembled components are loosened, and/or the dental restoration is fractured. This problem does not exist for a removable dental restoration, such as a snap-fit denture. Therefore, a need exists to provide a device, wherein arrangement of the dental restoration can be adjusted relative to a fixture before rigidly securing the components together to compensate for misalignments.

Dental restorations made in certain alloys, such as CrCo, sometimes distorts between fabrication and installation, whereby the restoration will be misaligned with installed fixtures. This is independent whether the restoration is installed at the time of surgery or at some time following the surgery.

WO 03/061512 discloses an arrangement with an implant and an attachment part, such as a dental bridge. The attachment part comprises a recessed wall arranged with displaceability in a main longitudinal direction of the implant relative an outer surface of a portion, preferably on a spacer sleeve. The portion is expandable so that the attachment part is anchored to the portion.

WO 2005/060862 discloses an arrangement for orienting a bridge in a position relative to a dental implant. A spacer member comprises a first and a second sleeve shaped part. The sleeve shaped parts are adjustable mainly in the longitudinal direction in relation to each other. The sleeve shaped parts are located outside the dental bridge and devised for application at least partly within soft tissue.

Hence, an improved device and method for enabling an adjustment of a dental restoration relative at least one dental fixture would be advantageous, in particular allowing for increased flexibility, cost-effectiveness, reliability, patient safety, and/or patient satisfaction would be advantageous.

### Summary of the Invention

Accordingly, embodiments of the present invention preferably seeks to mitigate, alleviate or eliminate one or more deficiencies, disadvantages or issues in the art, such as the above-identified, singly or in any combination by providing a device, and a method according to the appended patent claims.

According to a first aspect, a device for enabling adjustment of a dental restoration relative at least one dental fixture comprises a restoration comprising at least one recess having a recess wall portion, an attachment portion having an attachment wall portion devised for arrangement at least partly within the recess, and an attachment element devised for arrangement relative a dental fixture. At least one of the wall portions is tiltable when arranged in relation to one another. A bridging element devised for arrangement between the wall portions and for mechanically connecting said wall portions.

In some embodiments the extension of the contact zone between the bridging element and the recess wall portion in the vertical direction of attachment wall portion and/or the recess wall portion is considerably less than the extension of the attachment wall portion as such. This provides for improved tiltability of the attachment wall portion. For example, the length of the contact zone may be in the range of 0.1-0.6 mm whereas the length of the attachement wall portion between its proximal end and the contact zone may be in the range of 2-6 mm. Furthermore, the wider gap between the attachment wall portion and the recess wall portion, the better tiltability.

According to a second aspect, a method for adjusting a dental restoration relative at least one dental fixture, comprises providing a restoration comprising at least one recess having a recess wall portion, providing an attachment portion having an attachment wall portion devised for arrangement at least partly within the recess, an attachment element devised for arrangement relative a dental fixture, and a bridging element for mechanically connecting said wall portions, arranging the bridging element between the wall portions, and arranging said wall portions tiltably in relation to one another.

Further embodiments of the invention are defined in the dependent claims, wherein features for the second and subsequent aspects of the invention are as for the first aspect mutatis mutandis.

Some embodiments of the invention provide for adjustment of the dental restoration relative the fixture. Some embodiments provide for adjustability in the vertical and lateral directions.

Some embodiments of the invention provide for improved durability of the dental restoration, such as reduced risk for fracture.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

These and other aspects, features and advantages of which embodiments of the invention are capable of will be apparent and elucidated from the following description of embodiments of the present invention, reference being made to the accompanying drawings, in which
Fig. 1 is a side view of the device;
Fig. 2 is a cross section view of the device; and
Fig. 3 is a flow chart of the method.

### Description of embodiments

Specific embodiments of the invention now will be described with reference to the accompanying drawings.
This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings, like numbers refer to like elements.

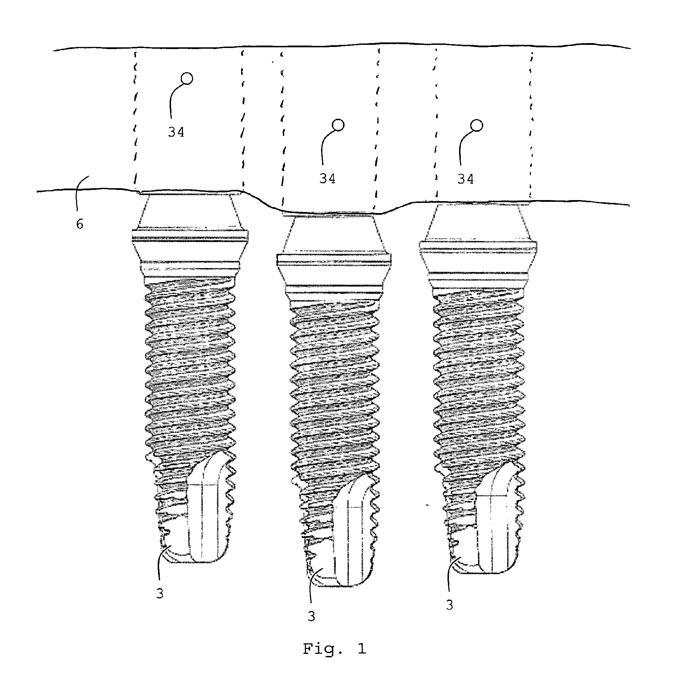

In Figs. 1-2, embodiments of a device 1 for enabling adjustment of a dental restoration 2 relative at least one dental fixture 3, is disclosed. The restoration comprises at least one recess 4 having a recess wall portion 5.

Fig. 1 illustrates an embodiment of the dental restoration 2 provided in the form of a dental bridge 6. The dental bridge 6 is arranged relative a plurality of dental fixtures 3. In this embodiment, three fixtures 3 are provided. Less or more fixtures can be used in other embodiments. For each fixture 3, the dental restoration 2 comprises a recess 4 having a recess wall portion 5.

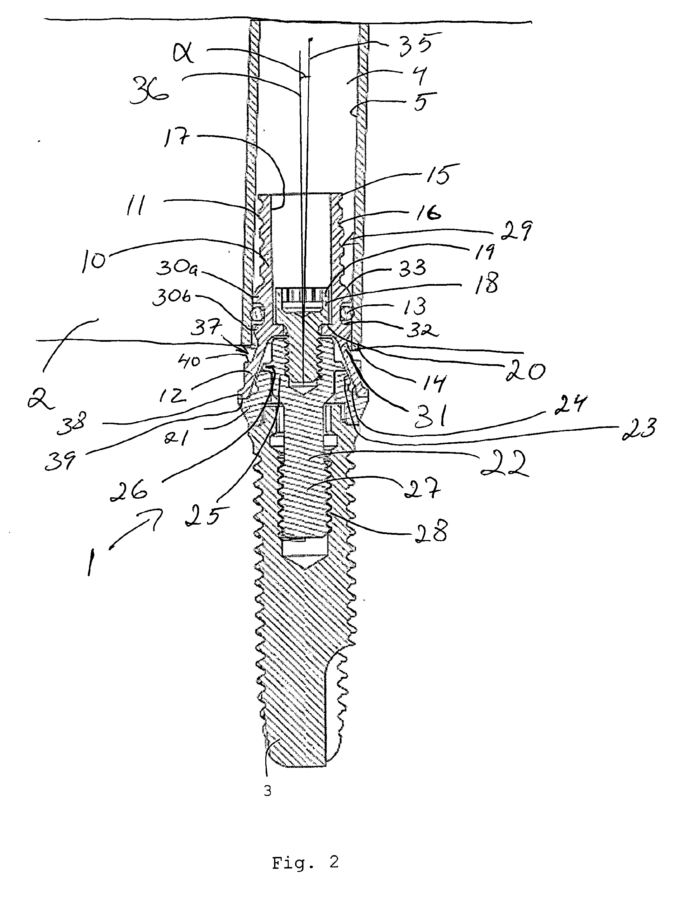

Fig. 2 illustrates an embodiment of an attachment portion 10 of the device 1. The attachment portion 10 has an attachment wall portion 11 devised for arrangement at least partly within the recess, such as opposing the recess wall portion 5. Also, the attachment portion 10 comprises an attachment element 12 devised for arrangement relative the fixture 3.

The dental restoration 2 may be pre-fabricated before the fixtures 3 are installed in the patient. In such a case, a model of the dental situation in the oral cavity of the patient made be, such as a plaster model of the teeth of the patient. In the model, fixture replicas may be mounted, which approximates as closely as possible the predicted future position of the fixtures 3 position within the jawbone of the patient. A cylinder may be attached to the fixture replicas simulating the recess wall portion 5 of the dental restoration to be produced. A wax-up model of the dental restoration may be made based on the model with the cylinders attached to the fixture replicas. Alternatively or additionally, the positions of the cylinders when attached to the fixture replicas are registered using e.g. a scanner, such as a touch probe scanner or an optical scanner. A combination of the techniques may also be used. A dental restoration may then be fabricated wherein at least one recess 4 is provided. The intention is that the longitudinal axis of the recess 4 and the longitudinal axis of the fixture replica in the model should have a predetermined relationship, such as to coincide as closely as possible. If the position of a fixture 3 installed in the patient corresponds exactly to the position of a corresponding fixture replica in the model, the dental restoration 6 fits the fixture 3 installed in the patient. However, this is not always the case. Often times, a slight misalignment between the position of the fixture 3 as planned or registered using an impression, i.e. the fixture replica in the model, and as installed in the patient occurs. The misalignment can be in the vertical as well as the lateral direction relative the fixture 3. This, in turn, causes misalignment between the dental restoration 2 and the fixture 3.

As is illustrated in Fig. 2, at least the attachment wall portion 11 is tiltable relative the recess wall portion 5. In embodiments, said wall portions 4, 11 are arranged tiltable in relation to one another with a play. The tiltability provides for adjusting for lateral misalignments between the dental restoration 2 and the fixture 3. A bridging element 13 is arranged between the wall portions 5, 11. The bridging element 13 may be devised for mechanically connecting the wall portions 5, 11, such as adjustably connecting the wall portions 5, 11. This provides for maintaining the components in an assembled relationship for improved handling and yet adjustability in the lateral as well as the vertical direction. Hence, the bridging element 13 provides for adjustably connecting the attachment portion 10 to the dental restoration 2. The dental restoration 2 and the attachment portion 10 can be assembled before arranged relative to the fixture 3. After arrangement relative to the fixture 3, the attachment portion 10 and the dental restoration 2 can be rigidly connected to each other, as will be discussed below. Hence, adjustable installation of the device 1 is provided for.

In the embodiment of Fig. 2, the bridging element 13 is positioned at a distal end 14 of the recess 4. Furthermore, a proximal end 15 of the attachment wall portion 11 has a radial dimension that is less than a radial dimension of a section of the recess wall portion 5 opposing the proximal end 15 of the attachment wall portion 11. Hence, a play is provided between the attachment wall portion 11 and the recess wall portion 5.

The attachment wall portion 11 may be formed by a body. The body may, e.g., be cylindrical, such as right circular cylindrical. Alternatively, it is formed as a truncated cone, or is tapered. Similarly, the recess wall portion 5 may be formed by the recess in the dental restoration 2. The recess may, e.g., be cylindrical, such as right circular cylindrical. Alternatively, the recess 4 may be tapered with the wider base towards the fixture 3. The recess wall portion 5 and the attachment wall portion 11 may have substantially complementary shapes.

At least one of the recess wall portion 5 and the attachment wall portion 11 comprises at least one groove 16. The groove 16 may e.g. circumferentially extend around the recess wall portion 5 and/or the attachment wall portion 11. Alternatively or additionally, the groove 16 is a semi-spherical dimple (not shown). In the embodiment of Fig. 2, the attachment wall portion 11 comprises a plurality of circumferential grooves 16. The groove 16 may provide for improved attachment of and/or space for a cementing compound (further discussed below). The groove 16 may improve the distribution of the cementing compound around the attachment wall portion 11.

The body of the attachment portion 10 may comprise a though bore 17. In the embodiment of Fig. 2, the through bore 17 is devised for receiving an attachment fastening member 18. The attachment fastening member 18 may be a screw. The attachment fastening member 18 comprises threads for engagement with threads secured in the fixture 3. A head 19 of the attachment fastening member 18 is arranged to abut a seat 20 located within the through bore 17. Hence, the attachment fastening member 18 may rigidly connect the attachment portion 10 to the fixture 3.

In the embodiment of Fig. 2, a spacer member 21 is provided between the attachment element 12 and the fixture 3. Hence, the attachment portion 10 is indirectly arranged relative the fixture. In this embodiment, the attachment element 12 is shaped as a truncated cone. The spacer member 21 is at least partly located within a recess of the attachment element 12. A spacer fastening member 22 is devised for connecting the spacer member 21 to the fixture 3. A spacer member wall portion 23 may be complementary in shaped to an opposing portion of an inner surface 24 of the recess of the attachment element 12. The complementary surfaces 23, 24 may be conical. This provides for improved adjustment of the attachment wall portion 11 when the attachment portion 10 is fitted to the fixture 11. The spacer member may e.g. be an abutment, such as a multi-unit abutment available via the applicant of the present invention.

In the embodiment of Fig. 2, the spacer fastening member 22 comprises at a coronal end a head 25 with a flange 26 mating a top surface of the abutment 21. An apical end of the spacer fastening member 22 comprises a threaded post 27 extending into and mating with a thread 28 of a recess located within the fixture 3. Hence, the abutment may be rigidly connected to the fixture 3. In the embodiment of Fig. 2, the attachment fastening member comprises an helical thread mating with a helical thread of a recess in the spacer fastening member 22.

The spacer element 21 may be devised for extending though soft tissue of the patient. Hence, when the devise 1 is to be fitted to the fixture 3, the attachment element 12 will be located externally of the soft tissue. This may be more convenient to the patient and provide for improved soft tissue healing. Furthermore, if the fixture is left for some time following surgery in order to improve osseointegration before the dental restoration 2 is installed, the soft tissue can start integrating with the abutment. Removing any component at this stage could result in prolonged healing and discomfort for the patient. Using a spacer member 21 also provides for easier access to connection surfaces of the spacer member 21 compared to attaching the attachment portion 10 directly onto a connection surface of the fixture 2 if the latter surface is located within the soft tissue.

In other embodiments, the attachment portion 10 is attached directly on a fixture (not shown). Such a fixture may e.g. be a one-piece implant having a spacer element, e.g. and abutment, integrated with a body portion including helical threads located thereon. The integrated spacer element may e.g. be configured, at least at its outer surfaces mating with the attachment member 12, corresponding to the spacer member 21 described above.

When the device 1 has been arranged, directly or indirectly, relative the fixture a gap 29 between the recess wall portion 5 and the attachment wall portion 11 may be provided. The gap 29 may be devised for receiving a cementing compound. The cementing compound may be provided in the gap 29. When set, the cementing compound provides a rigid connection between the attachment wall portion 11 and the recess wall portion 5. The wall portions 5, 11 can be adjusted both in the vertical and the horizontal direction. When the cementing compound is set, the relationship between the wall portions 5, 11 is maintained. A mechanical rigid connection or interlocking between the wall portions 5, 11, such as mechanical expansion could cause stresses and/or misalignments between the wall portions 5, 11.

According to embodiments, a resilience of the bridging element 13 exceeds a resilience of the wall portions. The wall portions 5, 11 may e.g. be made of solid metal, plastic, ceramic etc. The bridging element 13 may be made of a resilient material, such as silicon or rubber. Alternatively or additionally, the bridging element 13 has resilient properties. A spring, such as a helical spring or a leaf spring, may provide such resilient properties. A helical spring may e.g. be provided circumferentially around the periphery of the attachment wall portion 11. Alternatively or additionally, a plurality of leaf springs extending in the longitudinal direction of the attachment wall portion 11 may be provided around the periphery of the attachment wall portion 11.

In some embodiments, the bridging element 11 has in an unloaded state, i.e. before assembling of the device 1, a largest radial extension relative a center axis of the attachment portion 11 exceeding a smallest radial extension of the recess wall portion 5. Hence, the bridging element 11 provides a clamp between the attachment wall portion 11 and the recess wall portion 5 when assembled.

In some embodiments, the bridging element 13 is a resilient bridging element arranged to resiliently fit between the wall portions. This provides for adjustability in the vertical and/or the horizontal direction. Furthermore, reduction of stress between the components of the device 1 is provided for. Such a resilient bridging element may be provided by a silicon or rubber member, e.g. an o-ring.

In some embodiments, the bridging element 13 is circumferentially arranged around the attachment portion. Furthermore, in some embodiments, the bridging element 13 is circumferentially arranged around a periphery of the attachment portion, such as around the attachment wall portion 11.

In some embodiments, the device 1 comprises a sealing member arranged in the gap 29. The sealing member may be devised for sealing at least partially between the wall portions 5, 11. In some embodiments, the sealing member may be devised for completely sealing at least a section between the wall portions 5, 11. In some embodiments, the bridging element is the sealing member. The sealing member prevents that the cementing compound exits the gap 29 and enters into the space between the dental restoration 2 and the fixture 3 and/or the spacer member 21. The degree of sealing may be dependent on the viscosity of the cementing compound. The more viscous cementing compound, the less sealing may be provided. For example, a helical spring may prevent a highly viscous cementing compound from entering into the space between the dental restoration 2 and the fixture 3.

In the embodiment of Fig. 2, the bridging element 13 comprises a resilient o-ring. A resilience of the o-ring exceeds in some embodiments a resilience of the wall portions 5, 11. Furthermore, in some embodiments, the o-ring has a largest radial extension relative a center axis of the attachment portion exceeding a smallest radial extension of the recess wall portion before assembling. In the embodiment of Fig. 2 the bridging element 13 is illustrated in its unloaded state although it is assembled with the dental restoration 2. This is only for illustrative purposes to show the radial extensions. It should be understood that the bridging element in reality would be compressed when assembled as illustrated in Fig. 2. Hence, the o-ring can be compressed to provide a clamping affect between the wall portions 4, 11 when provided therebetween. Furthermore, an o-ring extending circumferentially around the attachment wall portion 11 may provide for a resilient bridging element as well as a sealing, which is substantially tight.

In some embodiments, the attachment portion comprises at least one protrusion 30a, 30b. The protrusion may have a radial extension that is slightly less than the radial dimension of an opposing section of the recess wall portion 5. The protrusion 30a, 30b may be positioned at a distal end 31 of the attachment portion 10. Hence, when assembled with the dental restoration 2, the protrusion 30a, 30b may be positioned within the recess 4 at the distal end 14 thereof. The protrusion 30a, 30b may provide for maintaining the bridging portion 13 in a fixed position relative the attachment portion 11 when the attachment portion 10 is assembled with the dental restoration 2 and/or when the components are adjusted relative each other. The protrusion 30a, 30b may radially extend around the periphery of the attachment wall portion 11. In the embodiment of Fig. 2, the protrusion 30a, 30b comprises a radially extending protrusion having a circumferentially extending annular groove 32, in which the bridging element 13 is at least partly positioned. The protrusion 30a, 30b may comprise two radially extending circumferential flanges provided at both sides of annular groove 32. At least one of the flanges may have an at least partly arcuate extension in the longitudinal direction of the attachment portion 10 from a most radially extending point of the flange 30a, 30b towards the attachment wall portion 11.

The distance in the radial direction between a most radial portion of the protrusion 30a, 30b and the recess wall portion 5 may be in the range of 0.05-1.5 mm, such as 0.1 mm.

The protrusion 30a, 30b is located at a distance in the vertical direction of the proximal end 17 of the attachment portion 10. This distance may be in the range of 2-7 mm, such as 3-5 mm, preferably 4 mm. This leaves sufficient space for providing the gap 29. Furthermore, the diameter of the attachment wall portion 10 at the proximal end 17 may be on the range of 2.5-3.5 mm, such as 2.8-3.2 mm, preferably 3.1 mm. The diameter of the recess 4 may be in the range of 3.2-4.2 mm, such as 3.4-3.8 mm, preferably 3.6 mm. With the preferred diameters, a maximum gap of 0.3 mm circumferentially extending around the attachment wall portion 11 may be provided when the attachment wall portion 11 is centered within the recess wall portion 5, such as when both portions 5, 11 are either tapered or cylindrical.

In the embodiment of Figs. 1-3, the recess 4 comprises a through bore with two opened ends. In other embodiments, the recess 4 comprises a closed bore with at least one opened end and one closed end.

In the embodiment of Fig. 1, the dental restoration comprises a lateral opening 34 to the recess 4. The opening may provide for improved access to the recess 4 for applying the cementing compound. The opening 29 may be configured in size and shape to receive the tip of an injection syringe.

In the embodiment of Fig. 2 it is illustrated that the attachment portion 10 can be angled or tilted relative the recess 4. As is seen in this embodiment, the attachment element 12 is arranged correctly aligned relative the fixture 3 via the spacer member 21. When correctly aligned, a connection surface 38 of the attachment portion 10 abuts a mating connection surface 39 of the spacer member 21. Hence, the position of the attachment portion 10 has been adjusted relative the fixture 3 and yet without causing any stresses to the components involved. A longitudinal axis 35 of the attachment portion 10 is angled α degrees. The size of α is dependent on many factors, such as the extension of the attachment portion 10 within the recess 4, the extension of the contact zone between the bridging element 13 and the recess wall portion 5, the diameter of the attachment wall portion 11 at the proximal end 17, and the diameter of the recess wall portion 5.

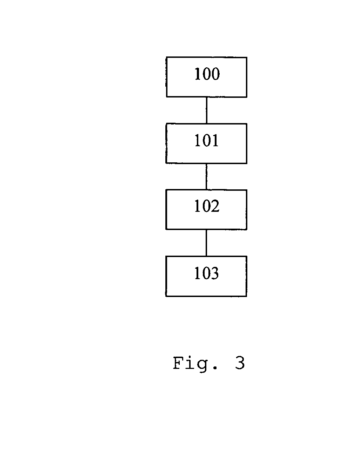

Fig. 3 illustrates an embodiment of a method for adjusting a dental restoration 2 relative at least one dental fixture 3. The method comprises in step 100 providing the dental restoration 2 comprising at least one recess 4 having a recess wall portion 5. In step 101 an attachment portion 10 having an attachment wall portion 11 devised for arrangement at least partly within the recess 4, the attachment element 12 devised for arrangement relative the dental fixture 3, and a bridging element 13 for mechanically connecting said wall portions 5, 11 are provided. In step 102, the bridging element 13 is arranged between the wall portions 5, 11. This may comprise resiliently fitting the bridging element 13 between the wall portions 5, 11. Step 102 may be provided by inserting the attachment portion 10 at least partly within the recess 4. Alternatively or additionally, step 102 may comprise arranging a play circumferentially around the attachment portion 10. Furthermore, step 102 may comprise providing a sealing between the wall portions 5, 11. In step 103, the wall portions 5, 11 are tilted in relation to one another to adjust for any misalignments. The device 1 may be pressed towards the fixture 3, whereby the attachment portion 10 is automatically adjusted within the recess 4 and aligned in a correct position relative the fixture 3. Then, the attachment fastening member 18 may be tightened. The attachment fastening member 18 may be fastened, directly or indirectly, e.g. via the spacer member 21, to the fixture 3, which finally aligns the attachment portion 10 to the fixture 3 and adjusts it relative the dental restoration 2. In step 103, the cementing compound is provided in the gap 4 between said wall portions 5, 11. The cementing compound may be provided by injection with a syringe. Hence, the components are permanently locked to each other when the cementing compound sets. When the cementing compound has set, the dental restoration can be removed from the fixture. An acrylic may be provided in the area 37 between the dental restoration 2 and the attachment element 12. This may provide for improved aesthetics of the final restoration. Furthermore, it facilitates hygienic maintenance of the dental restoration.

In an alternative method, the attachment portion 10 is first rigidly attached to the fixture 3 before it is assembled with the dental restoration 2. Then, the dental restoration is arranged relative the attachment device 10 and secured thereto as described above.

The dental restoration may comprise a dental bridge 6, such as milled bridge, or an acrylic bridge. The recess 4 may be formed directly within the dental bridge 6, such as by milling the recess in a blank forming the dental restoration or a framework therefore. Alternatively, the recess 4 may be provided within a sleeve, around which the dental restoration 2 is formed, such as for forming an acrylic bridge. Such a sleeve is sometimes referred to as an adapter.

When the dental restoration 2 is planned on a model, the attachment portion 10 may be attached to a fixture replica or spacer member replica. The spacer may be positioned between the attachment member 12 and the distal end 14 of the dental restoration 2 or the sleeve if a sleeve is used for making the dental restoration 2. This provides for adjusting for vertical misalignment of the fixture 3 compared to a planned position even when the fixture 3 is closer to the dental restoration 2 than as planned.

In the embodiment of Fig. 2, the attachment portion 10 comprises a ledge 40. The ledge 40 is provided between connection surface 38 and the protrusion 30a, 30b. When the device 2 is assembled, the ledge is located outside the recess 4 facing a distal end thereof. The ledge may support the spacer, the attachment member 12 and the distal end 14 of the dental restoration 2 or the sleeve if a sleeve is used for making the dental restoration 2.

In the embodiment of Fig. 2, the device 2 can be adjusted a maximum vertical distance defined by the ledge 40 and the centre of the bridging element 13, such as until the bridging element 13 exits the recess 13. The maximum distance may be in the range of 1-1.5 mm.

The cementing compound may e.g. comprise glass ionomer cement, which is commonly used in dentistry. This is only one example of a cementing compound. Other cementing compounds can be used as long as sufficient retention between the wall portions 5, 11 is provided.

As the attachment portion 10 provides for vertical as well as lateral adjustment of the attachment device 10 relative the dental construction 2 before the components are secured to each other. This provides for taking care of any misalignments between the bridge as planned to a certain fixture and the actual position of the fixture. Hence, the device 1 is flexible.

The present invention has been described above with reference to specific embodiments. However, other embodiments than the above described are equally possible within the scope of the invention. Different method steps than those described above may be provided within the scope of the invention. The different features and steps of the invention may be combined in other combinations than those described. The scope of the invention is only limited by the appended patent claims.

## Claims

1. A device (1) for enabling adjustment of a dental restoration (2) relative at least one dental fixture (3), comprising
a dental restoration (2) comprising at least one recess (4) having a recess wall portion (5);
an attachment portion (10) having an attachment wall portion (11) devised for arrangement at least partly within the recess (4), and an attachment element (12) devised for arrangement relative a dental fixture (3);
at least one of the wall portions (5, 11) being tiltable when arranged in relation to one another; and
a bridging element (13) devised for arrangement between the wall portions (5, 11) and for mechanically connecting said wall portions (5, 11).

2. The device according to claim 1, comprising a gap between said wall portions (5, 11) devised for receiving a cementing compound.

3. The device according to claim 1 or 2, in which a resilience of the bridging element (13) exceeds a resilience of the wall portions (5, 11).

4. The device according to any of claims 1 to 3, in which the bridging element (13) has a largest radial extension in an unloaded state relative a center axis of the attachment portion (10) exceeding a smallest radial extension of the recess wall portion (5).

5. The device according to any of claims 1 to 4, in which the bridging element (13) is arranged to resiliently fit between the wall portions (5, 11).

6. The device according to any of the previous claims, in which a play is circumferentially provided around the attachment wall portion (11) when arranged within the recess (4).

7. The device according to any of the previous claims, in which the bridging element (13) is circumferentially arranged around the attachment wall portion (11).

8. The device according to any of the previous claims, comprising a sealing member devised for arranged in the gap and devised for sealing between the wall portions (5, 11).

9. The device according to claim 8, in which the bridging element (13) is the sealing member.

10. The device according to any of the previous claims, wherein the attachment portion (10) comprises at least one substantially circumferential protrusion devised for arrangement within the recess.

11. A method for adjusting a dental restoration (2) relative at least one dental fixture (3), comprising
providing a dental restoration comprising at least one recess (4) having a recess wall portion (5); providing an attachment portion (10) having an attachment wall portion (11) devised for arrangement at least partly within the recess (4), an attachment element (12) devised for arrangement relative a dental fixture (3), and a bridging element (13) for mechanically connecting said wall portions (5, 11); arranging the bridging element (13) between the wall portions (5, 11); and
arranging said wall portions (5, 11) tiltably in relation to one another.

12. The method according to claim 11, comprising providing a cementing compound in a gap between said wall portions (5, 11).

13. The method according to any of claims 11 to 12, comprising resiliently fitting the bridging element (13) between the wall portions (5, 11).

14. The method according to any of claims 11 to 13, comprising circumferentially arranging a play around the attachment wall portion (11) within the recess.

15. The method according to any of claims 11 to 14, comprising sealing between the wall portions (5, 11).
